# EUROPÄISCHE PATENTANMELDUNG

(11) **EP 2 149 511 A2**
(43) Veröffentlichungstag der Anmeldung: **03.02.2010**
(21) Anmeldenummer: 09165530.8
(22) Anmeldetag: 15.07.2009
(51) Int. Cl.: B65G 21/20, B65G 17/48

(54) **Umlenkvorrichtung für eine Fördereinrichtung**

(30) Priorität: 29.07.2008 DE 202008010177 U
(71) Anmelder: SCHÜCO International KG, 33609 Bielefeld (DE)
(72) Erfinder: Pfeiffer, Thomas, 49201 Dissen a. TW (DE); Kleinschmidt, Stephan, 32312 Lübbecke (DE); Stockhausen, André, 32049 Herford (DE)
(74) Vertreter: Dantz, Jan Henning

(57) **Zusammenfassung**

Eine Umlenkvorrichtung für eine Fördereinrichtung (1) umfasst einen umlaufenden Förderstrang (2), der aus einer Vielzahl von relativ zueinander beweglichen Fördersegmenten (3) gebildet ist, wobei an einem inneren Umlenkbereich des Förderstranges (2) mindestens zwei Umlenkrollen (6) und mindestens eine Leitrolle (5) vorgesehen sind, an denen ein nicht angetriebenes Band (7) umlaufend geführt ist, das in dem inneren Umlenkbereich an einer Innenseite der Fördersegmente (3) anliegt. Dadurch können die Fördersegmente (3) besser geführt werden, was verhindert, dass die Fördersegmente (3) aneinander anstoßen.

## Beschreibung

Die vorliegende Erfindung betrifft eine Umlenkvorrichtung für eine Fördereinrichtung, mit einem umlaufenden Förderstrang, der aus einer Vielzahl von relativ zueinander beweglichen Fördersegmenten gebildet ist.

Die DE 24 17 910 offenbart einen Kurvengurtförderer, bei dem der Fördergurt bogenförmig geführt ist und an einer Innenseite eine Seitenführung vorgesehen ist, die ein umlaufendes Band aufweist, das an mehreren Führungsrollen gelagert ist. An dem Band wird das Gurtband an einer Längskante geführt. Der Fördergurt ist dabei aus Gummi oder einem anderen elastomeren Material hergestellt und kann daher gedehnt werden. Nach der Montage des Fördergurtes kann dieser nur äußerst aufwendig ausgetauscht oder repariert werden.

Die EP 1 054 825 offenbart eine Fördervorrichtung, bei der einzelne Fördersegmente nach Art einer Kette ineinander greifen und sowohl in horizontale Richtung als auch in vertikale Richtung relativ zueinander verschwenkt werden können. Die Fördersegmente sind dabei für eine Umlenkung an einer Führung seitlich gehalten, so dass die Bewegungsbahn der einzelnen Fördersegmente vorgegeben ist. Um im Umlenkbereich einer Geräuschentwicklung durch aufeinanderstoßende Fördersegmente entgegen zu wirken, sind ferner in einem Umlenkbereich an der Innenseite mehrere Rollen vorgesehen. Diese feste Montage der Rollen hat allerdings den Nachteil, dass die Umlenkung mit einem vorbestimmten Radius erfolgt. Eine flexible Anpassung ist nicht möglich. Zudem tritt bei der Führung der Fördersegmente eine Reibung auf, die für einen erhöhten Energieverbrauch sorgt.

Es ist daher Aufgabe der vorliegenden Erfindung eine Umlenkvorrichtung für eine Fördereinrichtung zu schaffen, die eine flexible Anpassung ermöglicht und einen reibungs- und geräuscharmen Betrieb ermöglicht.

Diese Aufgabe wird mit einer Umlenkvorrichtung mit den Merkmalen des Anspruches 1 gelöst.

Erfindungsgemäß ist an einem inneren Umlenkbereich des umlaufenden Förderstranges eine Führung vorgesehen, die mindestens zwei Umlenkrollen und mindestens eine Leitrolle umfasst, an denen ein nicht angetriebenes Band umlaufend geführt ist, das in dem inneren Umlenkbereich an einer Innenseite der Fördersegmente anliegt. Dadurch können die Fördersegmente über das Band geführt werden, was für eine geräuschmindernde Wirkung sorgt, da durch eine entsprechende Führung verhindert werden kann, dass die Fördersegmente aneinander anstoßen. Ferner kann die Reibung im Bereich der Umlenkvorrichtung minimiert werden, da dass umlaufende Band an den Umlenkrollen und der mindestens einen Leitrolle mit wenig Reibung geführt ist.

Vorzugsweise ist an den Fördersegmenten randseitig an der Innenseite eine Aufnahme für das umlaufende Band ausgebildet. Dadurch kann eine reibschlüssige Verbindung zwischen dem Band und den Fördersegmenten bereitgestellt werden, was die Qualität der Führung verbessert. Die Fördersegmente können in eine Förderrichtung relativ zueinander verschiebbar ausgebildet sein, so dass der Führung durch das Band im Bereich der Umlenkung eine wichtige Bedeutung zukommt. Die Aufnahmen können nutförmig ausgebildet sein, in die das Band mit einem entsprechenden Querschnitt formschlüssig eingreift. Das Band selber kann dabei aus einem flexiblen Material gebildet sein, beispielsweise aus einem gummiartigen Material.

Gemäß einer weiteren Ausgestaltung der Erfindung sind die Umlenkrollen und/oder Leitrollen federnd gelagert. Dadurch können seitlich auftretende Kräfte aufgenommen werden, was zu einem ruhigen und stoßfreien Lauf des Förderstranges führt.

Die Umlenkrollen und/oder die Leitrollen können dabei äquidistant zu der Innenseite der Fördersegmente im Umlenkbereich angeordnet sein. Dies gewährleistet eine gleichmäßige Führung des Bandes.

Vorzugsweise sind die Umlenkrollen und/oder die Leitrollen zur Änderung der Kurvengeometrie des Umlenkbereiches verstellbar ausgebildet. Dadurch können unterschiedliche Kurvengeometrien auf einfache Weise realisiert werden. Das umlaufende Band spannt sich dann um die Kontur der verstellten Rollen. Hierfür kann vorzugsweise eine Spannvorrichtung für das Band vorgesehen sein, so dass bei einer Verstellung der Kurvengeometrie die Spannung des Bandes gehalten wird.

Die Fördersegmente treiben das Band über den Eingriff an der Innenseite an. Das Band kann dabei als Zahnriemen ausgebildet sein, um die Haftung zwischen den Fördersegmenten und dem Band bzw. Zahnriemen zu erhöhen. Dabei liegen die Zähne des Zahnriemens an der Innenseite der Fördersegmente an, um einen kraft-und reibschlüssigen Kontakt mit den Fördersegmenten bereitzustellen, wobei die einzelnen Zähne auch für eine gewisse Elastizität in eine Richtung senkrecht zur Förderrichtung sorgen. Es ist auch möglich, das Band beidseitig als Zahnriemen auszubilden, so dass die entsprechenden Zähne sowohl an den Fördersegmenten als auch an entsprechenden Aufnahmen der Umlenkrollen der Leitrollen anliegen.

Die Erfindung wird nachfolgend anhand mehrerer Ausführungsbeispiele mit Bezug auf die beigefügten Zeichnungen näher erläutert. Es zeigen:

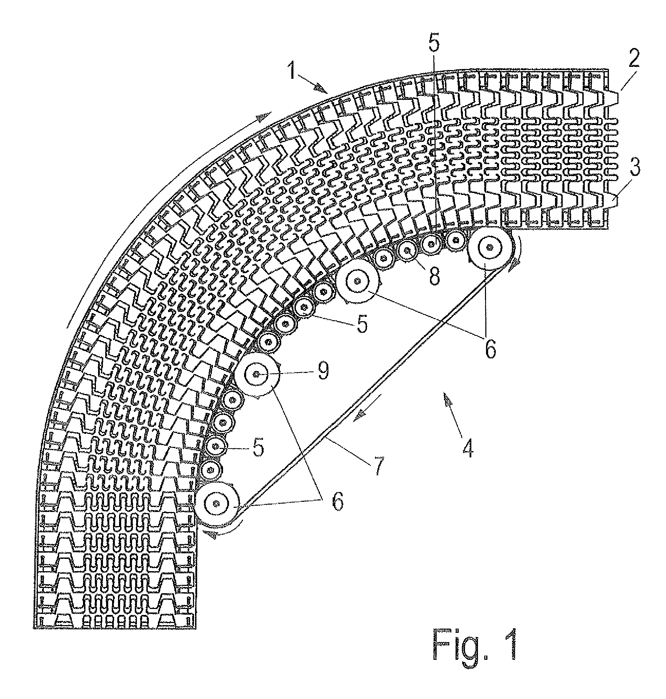

- Figur 1: eine Draufsicht auf ein Ausführungsbeispiel einer erfindungsgemäßen Umlenkvorrichtung;
- Figur 2: eine Draufsicht auf eine Umlenkrolle der Umlenkvorrichtungder Figur 1;
- Figur 3: eine geschnittene Seitenansicht der Umlenkrolle der Figur 2;
- Figuren 4A und 4B: zwei Ansichten einer modifizierten Umlenkrolle einer Umlenkvorrichtung;
- Figuren 5A und 5B: zwei Ansichten einer modifizierten Ausgestaltung einer Umlenkrolle für eine Umlenkvorrichtung, und
- Figuren 6A und 6B: zwei Ansichten einer modifizierten Ausgestaltung einer Umlenkrolle einer Umlenkvorrichtung.

Eine Fördereinrichtung 1 umfasst einen umlaufenden Förderstrang 2, der aus einer Vielzahl von relativ zueinander verschiebbaren Fördersegmenten 3 gebildet ist. Diese Fördersegmente 3 werden in einem kurvenförmigen Umlenkbereich an einer Innenseite über eine Umlenkvorrichtung 4 geführt. Die Fördersegmente 3 weisen in Bewegungsrichtung Vorsprünge und Ausnehmungen auf, die beim Zusammenschieben der Fördersegmente 3 ineinander im Wesentlichen formschlüssig ineinander greifen. Beim Auseinanderziehen der Fördersegmente können sich kleine Spalte bilden, wobei die Fördersegmente 3 über ein oder mehrere Seile oder Kopplungselemente aneinander gehalten sind, so dass sich ein gleichmäßiger Abstand der Fördersegmente 3 beim Ziehen des Förderstranges ergibt.

Die Umlenkvorrichtung 4 umfasst zwei Umlenkrollen 6 und eine Vielzahl von Leitrollen 5, die kleiner ausgebildet sind als die im Durchmesser größeren Umlenkrollen 6. Die Leitrollen 5 und die Umlenkrollen 6 sind nicht angetrieben und führen lediglich ein Band 7, das in dem Umlenkbereich auf einer Seite an den Leitrollen 5 und Umlenkrollen 6 und an der gegenüberliegenden Seite an einer Innenseite der Fördersegmente 3 anliegt.

Die Leitrollen 5 und die Umlenkrollen 6 sind an einer Aufnahme befestigt und geben die Kurvenbahn des Förderstranges 2 vor. Um unterschiedliche Kurvenradien realisieren zu können, lassen sich die Umlenkrollen 6 und die Leitrollen 5 mit ihrer Drehachse verstellen, beispielsweise kann die Achse der Leitrollen 5 und Umlenkrolle 6 in einem Langloch festgelegt sein. Das Langloch erstreckt sich dabei in Längsrichtung radial zu einem Mittelpunkt der Umlenkung. Ferner können die Leitrollen 5 und Umlenkrollen 6 federnd gelagert sein, um den Druck jeder Rolle auf den Förderstrang 2 anzupassen.

Ferner kann durch eine elastische Lagerung der Leitrollen 5 und der Umlenkrollen 6 eine Abfederung von Stößen und Vibrationen erfolgen.

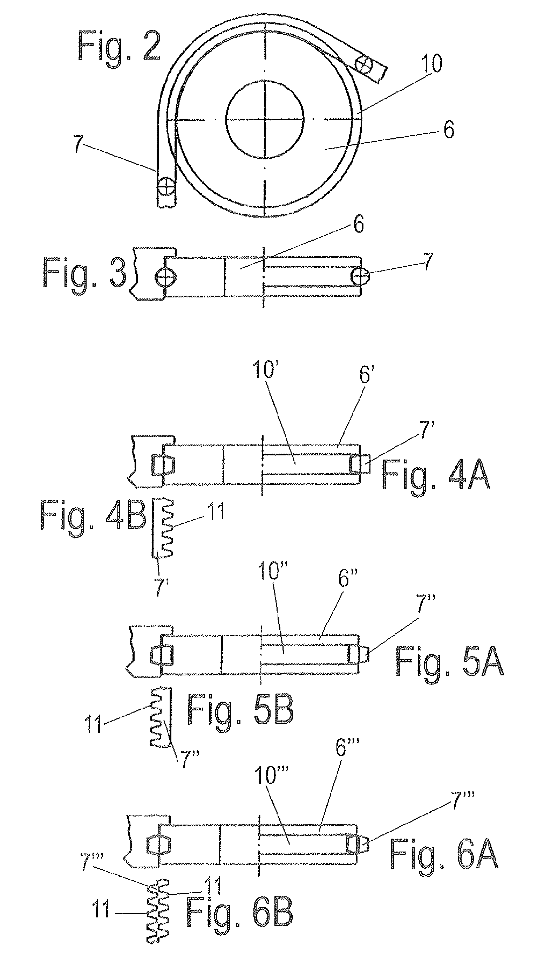

Wie in den Figuren 2 und 3 zu sehen ist, umfasst eine Umlenkrolle 6 mittig eine nutförmige Aufnahme 10, an der das im Querschnitt kreisförmige Band 7 aufgenommen ist. Dadurch kann ein Reibschluss zwischen der Umlenkrolle 6 und dem Band 7 bereitgestellt werden, so dass im Betrieb kein Schlupf auftritt. Durch die Minimierung der Relativbewegung der einzelnen Bauteile ergibt sich zudem eine Verschleißminimierung.

Das elastische Band 7 ermöglicht die Aufnahme stoßartiger Belastungen, die durch die Fördersegmente 3 übertragen werden können. Dadurch wird ein weitgehend schlag- und erschütterungsfreier Lauf des Förderstranges 2 gewährleistet.

In Figur 4A und 4B ist eine modifizierte Ausführungsform einer Umlenkrolle 6' gezeigt, an der ein Band 7' geführt ist. Die Aufnahme 10' an der Umlenkrolle 6' besitzt eine im Wesentlichen rechteckige Kontur, in die das Band 7' im Wesentlichen formschlüssig eingefügt ist, wobei das Band 7' als Zahnriemen ausgebildet ist, dessen Zähne 11 zu der Aufnahme 10' der Umlenkrolle 6' gerichtet sind. Die Ausbildung des Bandes 7' als Zahnriemen erhöht die Elastizität des Bandes 7' was für einen besonders ruhigen Lauf des Förderstranges 2 sorgt.

In Figur 5A und 5B ist eine Ausführungsform einer Umlenkrolle 6" gezeigt, bei der an einer Aufnahme 10" ein Band 7" eingefügt ist. Das Band 7" ist wiederum als Zahnriemen ausgebildet, dessen Zähne 11 nach außen gerichtet sind, also an einer Aufnahme der Fördersegmente 3 anliegen. Auch durch diese Ausgestaltung wird eine gute Federwirkung zwischen der Umlenkrolle 6" und den Fördersegmenten 3 erreicht.

Bei dem in Figur 6A und 6B gezeigten Ausführungsbeispiel ist an einer Umlenkrolle 6"' eine Aufnahme 10"' ausgebildet, in die ein Band 7"' eingefügt ist. Das Band 7"' ist als Zahnriemen ausgebildet, an dessen gegenüberliegenden Seite jeweils Zähne 11 ausgebildet sind. Dadurch wird die Elastizität des Bandes 7"' in eine Richtung senkrecht zur Bewegungsrichtung erhöht.

Die Leitrollen 5 können ebenso wie die Umlenkrolle 6, 6', 6" und 6"' ausgebildet sein, wobei lediglich der Durchmesser der Leitrollen 5 verringert ist.

Ferner kann auch eine Spannvorrichtung für das Band vorgesehen sein, um bei einem Verstellen der Position der Leitrollen 5 und/oder Umlenkrollen 6 eine Spannung des Bandes 7 aufrechtzuerhalten.

## Patentansprüche

1. Umlenkvorrichtung für eine Fördereinrichtung (1), mit einem umlaufenden Förderstrang (2), der aus einer Vielzahl von relativ zueinander beweglichen Fördersegmenten (3) gebildet ist, und an einem inneren Umlenkbereich des Förderstranges (2) mindestens zwei Umlenkrollen (6) und mindestens eine Leitrolle (5) vorgesehen sind, an denen ein nicht angetriebenes Band (7) umlaufend geführt ist, das in dem inneren Umlenkbereich an einer Innenseite der Fördersegmente (3) anliegt.

2. Umlenkvorrichtung nach Anspruch 1, **dadurch gekennzeichnet, dass** an den Fördersegmenten (3) randseitig an der Innenseite eine Aufnahme für das umlaufende Band (7, 7', 7", 7"') ausgebildet ist.

3. Umlenkvorrichtung nach Anspruch 1 oder 2, **dadurch gekennzeichnet, dass** die Fördersegmente (3) in Förderrichtung relativ zueinander verschiebbar ausgebildet sind.

4. Umlenkvorrichtung nach einem der Ansprüche 1 bis 3, **dadurch gekennzeichnet, dass** das Band (7, 7', 7", 7"') aus einem flexiblen Material gebildet ist.

5. Umlenkvorrichtung nach einem der Ansprüche 1 bis 4, **dadurch gekennzeichnet, dass** die Umlenkrollen (6) und/oder Leitrollen (5) federnd gelagert sind.

6. Umlenkvorrichtung nach einem der Ansprüche 1 bis 5, **dadurch gekennzeichnet, dass** die Umlenkrollen (6) und/oder die Leitrollen (5) äquidistant zu der Innenseite der Fördersegmente (3) im Umlenkbereich angeordnet sind.

7. Umlenkvorrichtung nach einem der Ansprüche 1 bis 6, **dadurch gekennzeichnet, dass** die Umlenkrollen (6) und/oder die Leitrollen zur Änderung der Kurvengeometrie des Umlenkbereiches verstellbar ausgebildet sind.

8. Umlenkvorrichtung nach einem der Ansprüche 1 bis 7, **dadurch gekennzeichnet, dass** eine Spannvorrichtung für das Band (7, 7', 7", 7"') vorgesehen ist.

9. Umlenkvorrichtung nach einem der Ansprüche 1 bis 8, **dadurch gekennzeichnet, dass** das Band als Zahnriemen (7', 7", 7"') ausgebildet ist.

10. Umlenkvorrichtung nach Anspruch 9, **dadurch gekennzeichnet, dass** die Zähne des Zahnriemens (7") an der Innenseite der Fördersegmente (3) anliegend.

11. Umlenkvorrichtung nach Anspruch 9, **dadurch gekennzeichnet, dass** das Band (7") als Zahnriemen mit beidseitig angeordneten Zähnen ausgebildet ist.
